Europäisches Patentamt

European Patent Office

Office européen des brevets

(19)

(11) Numéro de publication: **0 204 600
B1**

(12) **FASCICULE DE BREVET EUROPEEN**

(45) Date de publication du fascicule du brevet:
07.02.90

(51) Int. Cl.⁴: **F02P 5/04, B29C 67/18**

(21) Numéro de dépôt: **86401028.5**

(22) Date de dépôt: **14.05.86**

(54) Regulateur d'avance centrifuge de distributeur d'allumage de moteur à combustion interne.

(30) Priorité: **06.06.85 FR 8508541**

(43) Date de publication de la demande:
**10.12.86 Bulletin 86/50**

(45) Mention de la délivrance du brevet:
**07.02.90 Bulletin 90/6**

(84) Etats contractants désignés:
**DE GB IT**

(56) Documents cités:
**FR-A- 2 001 781
FR-A- 2 161 726
FR-A- 2 538 038
NL-A- 8 302 530**

(73) Titulaire: **EQUIPEMENTS ELECTRIQUES MOTEUR, 2, Rue André Boulle, F-94000 Creteil(FR)**

(72) Inventeur: **Heritier Best, Pierre, Orbeil, F-63500 Issoire(FR)**

(74) Mandataire: **Gamonal, Didier, Société VALEO Service Propriété Industrielle 30, rue Blanqui, F-93406 Saint Ouen(FR)**

## Description

La présente invention concerne un régulateur d'avance centrifuge pour distributeur d'allumage de moteur à combustion interne du type comportant à l'intérieur d'un boîtier, un plateau solidaire de l'arbre de commande et un plateau d'avance tourillonnant sur ledit arbre, ainsi qu'au moins deux masselottes montées pivotantes sur le plateau (2) solidaire de l'arbre de commande (3) et qui, sous l'action de la force centrifugeet de ressorts antagonistes accouplanti élastiquement les cleux plateaux (2) et (4) entre eux procurent un décalage angulaire entre lesdits plateaux en fonction de la vitesse du moteur et correspondant à une avance ou à un retard d'allumage, prennent appui sur des butées terminales ménagées sur le plateau porteur.

Dans ce type de régulateur centrifuge, il est connu de réaliser notamment l'accrochage des ressorts antagonistes et l'obtention des butées terminales par la découpe et le cambrage de pattes à même le plateau solidaire de l'arbre de construction métallique, en contact et mobiles sur lui-même et les uns par rapport aux autres, par exemple par rotation, pivotement ou translation.

Conséquemment, il se produit une usure par abrasion et corrosion dans la zone de contact et de frottement.

Pour remédier à ces inconvénients, il est connu d'enrober ou de coiffer d'une matière plastique les surfaces en contact. C'est ainsi que le brevet FR 2161726 montre des pattes d'accrochage des ressorts garnies d'une enveloppe en matière plastique et que la demande de brevet FR 84 18 695 du 7 décembre 1984 fait connaître des organes de contact en matière plastique rapportés sur des pattes cambrées pour constituer les butées terminales.

Il serait avantageux de pouvoir obtenir l'apport en matière plastique par surmoulage directement sur les pattes cambrées qui la supportent. Mais vu l'encombrement relativement faible du plateau dans lequel les pattes sont découpées et cambrées, le surmoulage ne pourrait s'effectuer qu'élément par élément, à savoir dans le cas présent en quatre opérations distinctes. Il en résulterait des temps d'obtention important d'où un prix de revient élevé.

L'invention vise à réduire ce temps d'opération de surmoulage et concerne à cet effet un régulateur d'avance centrifuge du type ci-dessus, caractérisé en ce que l'apport en matière plastique d'au moins une paire de pattes 11,13 est obtenu par surmoulage avant cambrage desdites pattes dans leur position fonctionnelle.

L'invention sera mieux comprise en regard de la description et des dessins annexés.

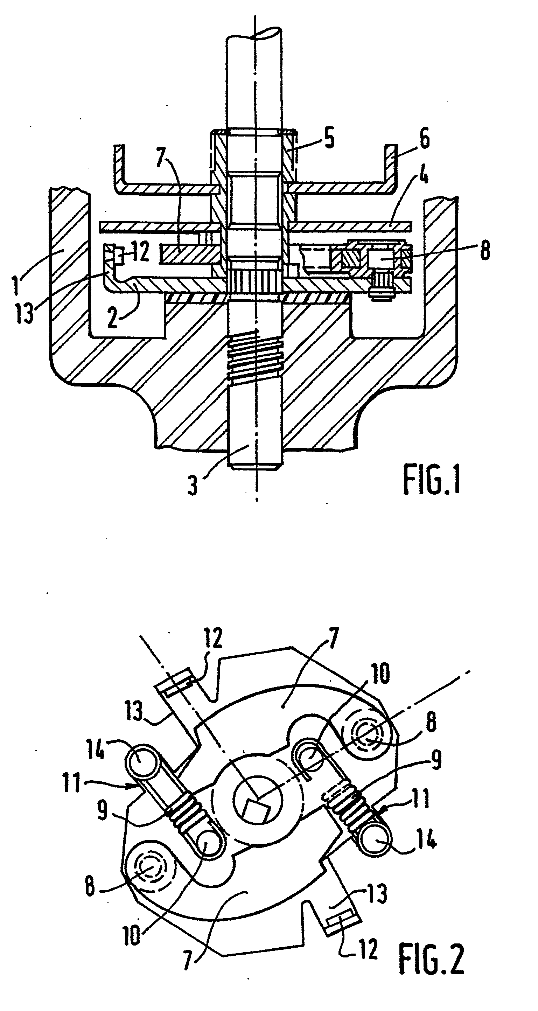

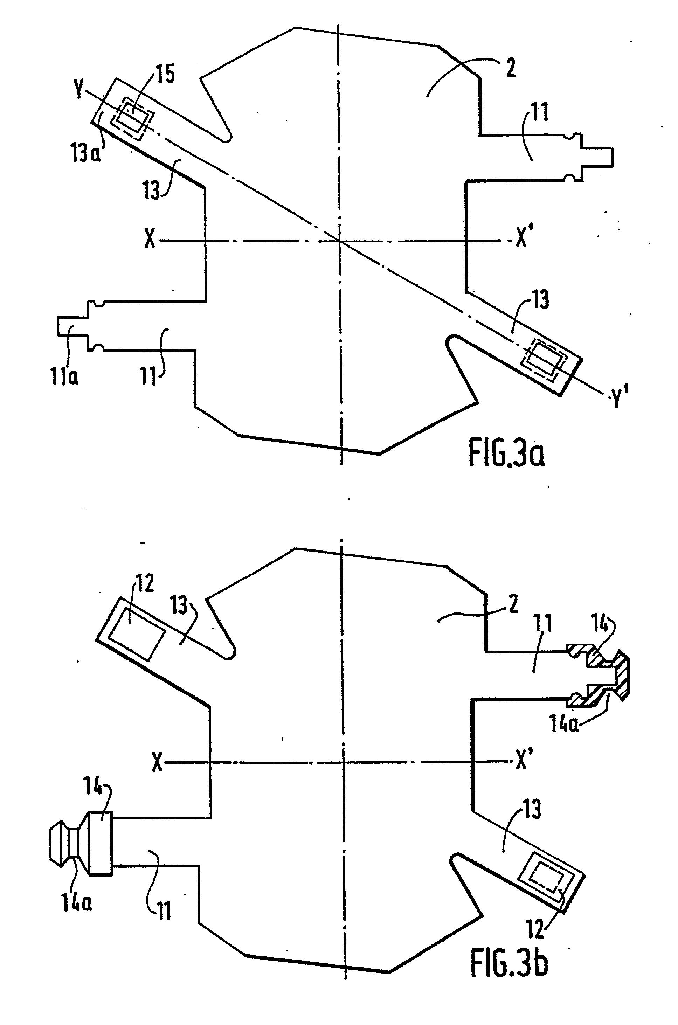

. La figure 1 est une vue en coupe longitudinale d'un régulateur d'avance centrifuge conforme à l'invention.
. La figure 2 est une vue de dessus de la figure 1 à laquelle le plateau supérieur d'avance a été enlevé pour une meilleure compréhension du dessin.
. La figure 3 est une vue de dessus du plateau inférieur d'avance à flan ouvert respectivement avant et après surmoulage, suivant l'invention.

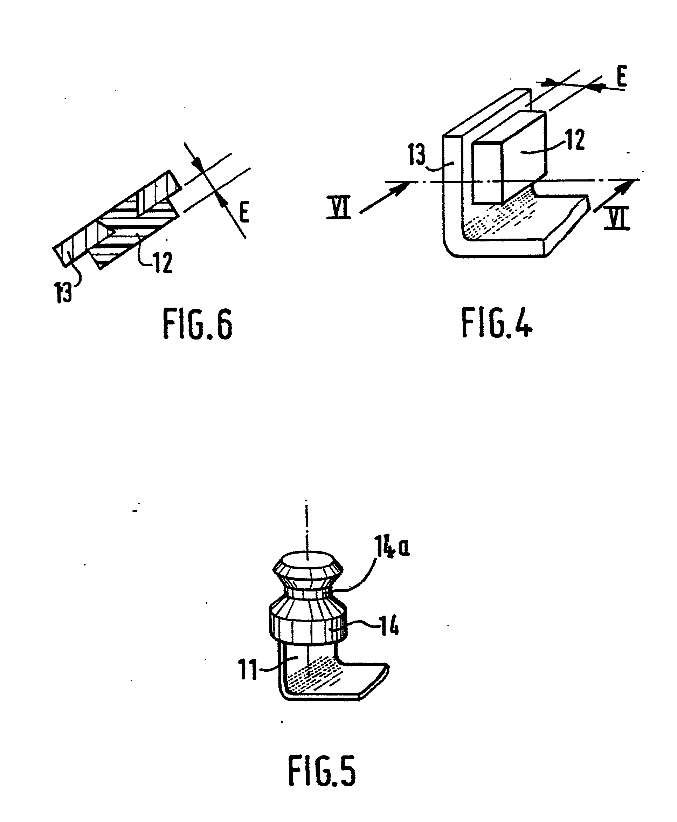

. Les figures 4 et 5 sont des vues partielles du plateau inférieur d'avance représentant plus particulièrement et respectivement une des pattes de butée et d'accrochage des ressorts après cambrage.
. La figure 6 est une vue en coupe selon la ligne VI-VI de la figure 4.

Le régulateur d'avance centrifuge, représenté suivant la figure 1, logé dans un boîtier 1 est constitué ; d'un plateau solidaire en rotation de l'arbre de commande 3 du distributeur d'allumage ; d'un plateau 4 d'avance tourillonnant sur ledit arbre 3 par l'intermédiaire d'un manchon 5 qui porte également l'élément 6 d'un dispositif magnétique de déclenchement d'allumage, lesdits plateaux 2 et 4 étant accouplés élastiquement l'un sur l'autre par l'intermédiaire de deux ressorts 9 ; de deux masselottes 7 montées pivotantes sous l'action de la vitesse de rotation de l'arbre de commande 3, sur le plateau 2, par l'intermédiaire de deux axes 8 diamètralement opposés et dont le débattement angulaire en fonction de l'avance à l'allumage, est limité par des butées 12.

Comme le montre la figure 2, les ressorts 9 sont reliés d'une part sur le plateau 4 par l'intermédiaire des axes 10 diamètralement opposés et d'autre part sur le plateau métallique 2 par une première paire de pattes d'accrochage 11 symétriquement opposées et obtenues par découpage et cambrage à l'équerre du plateau 2. Les butées 12 de limitation du débattement angulaire des masselottes 7 sont rapportées sur une seconde paire de pattes 13 diamètralement opposées obtenues également par découpage et cambrage à l'équerre du plateau 2.

La figure 3 fera mieux comprendre la méthode de fabrication.

Le plateaux métallique 2 obtenu par découpage à plat d'un flan possède donc deux paires de pattes ayant chacune des fonctions précédemment définies et qui, avant cambrage ont leurs extrémités libres orientées vers l'extérieur du flan. Les pattes 11 de la première paire, destinées à l'accrochage des ressorts 9, ont une extrémité libre 11a de forme particulière telle à permettre l'accrochage ultérieur d'un surmoulage de matière plastique 14 et sont situées approximativement parallèlement à l'axe X X' et symétriquement opposées. Les pattes 13 de la seconde paire, de forme rectangulaire, sont destinées à procurer une limitation au débattement angulaire des masselottes 7 et sont diamètralement opposées suivant un axe oblique Y Y' par rapport à l'axe X X' du plateau 2 et possèdent à leur extrémité libre 13a un trou 15 de forme rectangulaire, pour l'accrochage ultérieur d'un surmoulage de matière plastique 13.

Etant donnée la petite dimension du plateau 2, si le cambrage à l'équerre était effectué avant le surmoulage celui-ci devrait être pratiqué sur chaque patte l'une après l'autre et demanderait un temps total d'opération assez long.

Selon l'invention, les apports de matière plastique 12 et 14 par surmoulage se font donc avant cambrage à l'équerre des deux paires de pattes 11 et 13 et en une seule opération.

Chaque paire de pattes 11 et 13 recoit alors respectivement un apport par surmoulage différent, l'un 14 approximativement circulaire et comportant une gorge 14a de manière à permettre l'accrochage des ressorts 9, l'autre 12 constituant un organe de contact ou butée de forme approximative rectangulaire obtenue par surmoulage au droit d'un trou 15 de la patte 13 dont la forme troncpyramidale permet la retenue axiale dudit organe de contact 12 sur les pattes 13 (figure 6).

L'épaisseur E dudit organe de contact 12 peut varier suivant les courbes d'avance à l'allumage exigées par les différents moteurs à combustion interne comme décrit dans la demande précitée 84 18 695.

Lesdites pattes ainsi surmoulées sont ensuite cambrées à l'équerre dans leur position fonctionnelle (figure 4 et 5). Le surmoulage des apports en matière plastique se trouve ainsi effectué de manière aisé du fait de l'encombrement relativement important disponible autour du flan.

Il est bien entendu que les apports par surmoulage 12 peuvent être de toutes autres formes tant qu'ils remplissent les fonctions respectives de butées sur lesquelles s'appuient les masselottes centrifuges 7 et de moyens d'accrochage de l'une des extrémités des ressorts 9.

## Revendications

Régulateur d'avance centrifuge pour distributeur d'allumage de moteur à combustion interne du type comportant à l'intérieur d'un boîtier (1), un plateau (2) solidaire de l'arbre de commande (3) et un plateau d'avance (4) tourillonnant sur ledit arbre, ainsi qu'au moins deux masselottes (7) montées pivotantes sur le plateau (2) solidaire de l'arbre de commande (3) et qui, sous l'action de la force centrifuge et de ressorts antagonistes accouplant élastiquement les deux plateaux (2) et (4) entre eux procurent un décalage angulaire entre lesdits plateaux en fonction de la vitesse du moteur et correspondant à une avance ou à un retard d'allumage, prennent appui sur des butées (12) terminales ménagées sur le plateau (2) solidaire de l'arbre de commande (3), plateau métallique (2) dans lequel sont découpées et cambrées d'équerre une paire de pattes (11) sur lesquelles s'accrochent l'une des extrémités des ressorts (9) et une autre paire de pattes (13) constituant les butées terminales, lesquelles pattes (11,13) sont munies d'un apport en matière plastique (11,14) de forme prédéterminée, caractérisé en ce que l'apport en matière plastique (12,14) d'au moins une paire de pattes (11,13) orientée vers l'extérieur est obtenu par surmoulage avant cambrage desdites pattes dans leur position fonctionnelle.

## Claims

A centrifugal ignition timing regulator for an internal combustion engine ignition distributor, of the kind comprising, within a casing (1), a plate (2) which is fixed with respect to the control spindle (3), and an advance plate (4) which is pivoted on the said spindle, together with at least two inertia arms (7) pivotally mounted on the plate (2) fixed to the control spindle (3), so that the inertia arms, under the action of centrifugal force and of opposed springs which couple the two plates (2 and 4) together, produce an angular displacement between the said plates as a function of the engine speed and corresponding to an advance or retard of the ignition, the inertia arms coming into engagement on end stops (12) which are formed on the plate (2) that is fixed to the control spindle (3), this plate being of metal and having cut therefrom and bent at right angles a pair of arms (11), with one of the ends of the springs (9) being hooked on the said arms, and another pair of arms (13) constituting the end stops, the said arms (11, 13) being provided with a head piece in plastics material (12, 14) of predetermined shape, characterised in that the head piece of plastics material (12, 14) of at least one pair of the said arms (11, 13) is orientated towards the outside and is formed by in situ moulding before the said arms are bent into their operative position.

## Patentansprüche

Fliehkraftversteller für den Zündverteiler eines Verbrennungsmotors von der Art, die innen ein Gehäuse (1), eine fest mit der Antriebswelle (3) verbundene Platte (2) und eine um diese Welle rotierende Vorschubplatte (4) sowie wenigstens zwei Fliehgewichte (7) enthält, die drehbar an der fest mit der Antriebswelle (3) verbundenen Platte (2) angebracht sind und unter Einwirkung der Fliehkraft sowie unter der Einwirkung von entgegengesetzt wirkenden Federn, die die beiden Platten (2) und (4) auf elastische Weise miteinander verbinden, eine Winkelverschiebung zwischen den genannten Platten entsprechend der Motordrehzahl und entsprechend einer Zündvorverstellung bzw. einer Zündverzögerung bewirken und auf Endanschlägen (12) ruhen, die an der fest mit der Antriebswelle (3) verbundenen Platte (2) angebracht sind, wobei in der Metallplatte (2) ein Paar Laschen (11) ausgeschnitten und bügelförmig gewölbt sind, in die ein Ende der Federn (9) eingreift, während ein weiteres Paar Laschen (13) die Endanschläge bildet, und wobei die Laschen (11, 13) mit einem Ansatz aus Kunststoff (11, 14) bestimmter Form versehen sind, dadurch gekennzeichnet, daß der Kunststoffansatz (12, 14) von wenigstens einem Laschenpaar (11, 13), welches nach außen gerichtet ist, vor dem Umbiegen der genannten Laschen in die Arbeitsstellung durch Überformung hergestellt wird.

FIG.1

FIG.2

FIG.3a

FIG.3b

EP 0 204 600 B1

FIG.6

FIG.4

FIG.5